# EUROPÄISCHE PATENTANMELDUNG

(11) **EP 3 096 105 A1**
(43) Veröffentlichungstag der Anmeldung: **23.11.2016**
(21) Anmeldenummer: 16168944.3
(22) Anmeldetag: 10.05.2016
(51) Int. Cl.: F28F 3/02, F25B 39/02, F28F 13/00, F28F 13/18, F28D 9/00, F28D 15/04, F28D 21/00, F02M 26/22, F01N 5/02, F28D 15/02

(54) **KRAFTFAHRZEUG-WÄRMEÜBERTRAGERSYSTEM**

(30) Priorität: 12.05.2015 DE 102015107472
(71) Anmelder: Benteler Automobiltechnik GmbH, 33102 Paderborn (DE)
(72) Erfinder: Rubitschek, Felix, 33104 Paderborn (DE); Przybylski, Sven, 33104 Paderborn (DE); Düpmeier, Tobias, Dr., 33100 Paderborn (DE)
(74) Vertreter: Griepenstroh, Jörg

(57) **Zusammenfassung**

Die Erfindung betrifft ein Kraftfahrzeug-Wärmeübertragersystem mit einem geschlossenen Kreislauf für ein Arbeitsmedium AM. Das Kraftfahrzeug-Wärmeübertragersystem weist einen Verdampfer 1 zur Verdampfung des Arbeitsmediums AM auf. Erfindungsgemäß umfasst der Verdampfer 1 zumindest zwei Verdampferkassette 3, 4, wobei zwischen den Verdampferkassetten 3, 4 ein Abgaskanal 15 ausgebildet ist und jede Verdampferkassette 3, 4 eine Kapillarstruktur 8 sowie eine Flüssigseite 10 und eine Dampfseite 11 aufweist. Auf der Flüssigseite 10 ist ein Medienzulauf 12, 12a für flüssiges Arbeitsmedium AM vorgesehen. Weiterhin ist jeder Verdampferkassette 3, 4 ein Dampfsammler 13 zugeordnet.

## Beschreibung

Die Erfindung betrifft ein Kraftfahrzeug-Wärmeübertragersystem gemäß den Merkmalen im Oberbegriff von Anspruch 1.

Vor dem Hintergrund zunehmend knapper werdender fossiler Ressourcen und gesetzlichen Vorgaben hinsichtlich des CO₂-Austoßes von Kraftfahrzeugen haben Maßnahmen zur Erhöhung des Gesamtwirkungsgrades der Kraftfahrzeuge eine immer höher werdende Bedeutung. Etwa zwei Drittel der chemisch gebundenen Energie zum Antrieb eines Kraftfahrzeuges geht in Form von Verbrennungsabwärme und Reibungswärme verloren. Man ist daher bereits seit Längerem bestrebt, die Abgaswärme besser zu verwerten und zur Effizienzsteigerung von Kraftfahrzeugen zu nutzen. Neben Konzepten zur direkten Energierückgewinnung (Thermoelektrik, Rankine) bieten Maßnahmen in Verbindung des Thermomanagements von Kraftfahrzeugen, beispielsweise mit dem Ziel der Innenraumheizung oder der Verkürzung von Kaltstartphasen, Möglichkeiten zur Abgaswärmenutzung. So kann die Verkürzung von Kaltstartphasen durch eine beschleunigte Aufwärmung von Schmierstoffen, wie dem Motor- oder Getriebeöl, erfolgen, wodurch eine Reduzierung von Reibungsverlusten erzielt werden kann.

Durch die DE 10 2011 103 110 B4 ist ein Abgassystem für einen Verbrennungsmotor eines Kraftfahrzeugs mit einem Kreislaufwärmerohr bekannt. Das Abgassystem weist ein Abgasrohr, einen Kondensator, einen Verdampfer sowie den Kondensator und den Verdampfer verbindende Leitungen auf. Ein Wärmetransport der dem Abgas entzogenen Wärmeenergie erfolgt über ein Arbeitsmedium. Der Verdampfer ist aus einem Abgasrohr, einer Kapillarstruktur und einem Hüllrohr gebildet. Die Kapillarstruktur ist als poröser Körper zwischen dem Abgasrohr und dem Hüllkörper ausgebildet, wobei das Arbeitsmedium beim Durchtritt durch die Kapillarstruktur von einem flüssigen in einen gas- bzw. dampfförmigen Zustand übergeht.

Das Wärmerohr zeichnet sich unter anderem durch einen hohen übertragbaren Wärmestrom und eine flexible geometrische Anordnung aus. Es funktioniert allein durch den Wärmeeintrag ohne ein mechanisches Pumpen des Arbeitsmediums. Möglich ist dies durch die Verwendung einer Kapillarstruktur im Verdampfer, welche die Strömungsdruckverluste des Arbeitsmediums durch den Kapillardruck kompensiert. Das bekannte Wärmerohr ist konzentrisch ausgeführt mit innenliegender Gasführung bzw. innenliegendem Bypass. Dies lässt nur eine einseitige Wärmeabfuhr von innen nach außen zu. Auch ist die Fertigung von rohrförmigen Kapillarstrukturen aufwändig.

Der Erfindung liegt ausgehend vom Stand der Technik die Aufgabe zugrunde, ein für die Praxis verbessertes Kraftfahrzeug-Wärmeübertragersystem mit einem bauraum- und anwendungstechnisch verbesserten, gewichtsmäßig reduzierten sowie fertigungstechnisch vorteilhaften Verdampfer zu schaffen.

Die Lösung dieser Aufgabe besteht nach der Erfindung in einem Kraftfahrzeug-Wärmeübertragersystem gemäß Anspruch 1.

Vorteilhafte Ausgestaltungen und Weiterbildungen des erfindungsgemäßen Kraftfahrzeug-Wärmeübertragersystems und des Erfindungsgedankens sind Gegenstand der abhängigen Ansprüche 2 bis 16.

Das Kraftfahrzeug-Wärmeübertragersystem weist einen geschlossenen Kreislauf für ein Arbeitsmedium auf. In den Kreislauf ist ein Verdampfer integriert, der im Abgasstrom der Brennkraftmaschine des Kraftfahrzeugs angeordnet ist und wärmeübertragend mit dem Abgas in Kontakt gelangt. Das aus der Brennkraftmaschine des Kraftfahrzeugs abgeführte Abgas wird hierzu ganz oder teilweise durch einen Abgaskanal geleitet. Im Verdampfer wird das Arbeitsmedium verdampft und strömt von dort aus zu einem im Kraftfahrzeug angeordneten Kondensator. Im Kondensator erfolgt eine Wärmeübertragung mit einem Verbraucher, wobei das dampfförmige Arbeitsmedium kondensiert und verflüssigt wird. Über eine Rücklaufleitung wird das flüssige Arbeitsmedium in den Verdampfer zurückgeführt.

Erfindungsgemäß umfasst der Verdampfer zumindest zwei Verdampferkassetten, wobei zwischen den Verdampferkassetten ein Abgaskanal ausgebildet ist. Jede Verdampferkassette weist eine in diese integrierte Kapillarstruktur sowie eine Flüssigseite und eine Dampfseite auf. Flüssigseite und Dampfseite sind durch die Kapillarstruktur getrennt. Auf der Flüssigseite ist ein Medienzulauf für flüssiges Arbeitsmedium vorgesehen. Jeder Verdampferkassette ist ein Dampfsammler zugeordnet zur Aufnahme und Ableitung des erzeugten dampfförmigen Arbeitsmediums.

Durch die Kassettenbauweise bzw. plattenförmige Bauweise ist eine Modularisierung und Skalierung möglich. Weiterhin kann auf kompaktem Bauraum eine große Wärmeübertragerfläche realisiert werden. Die effektive Wärmeübertragerfläche kann über die Größe der Verdampferkassette variiert werden. Weiterhin besteht die Möglichkeit, mehrere Verdampfer bzw. Verdampferkassetten parallel zu betreiben und damit über die Anzahl der Abgaskanäle neben der Leistung auch den Wirkungsgrad in bestimmten Betriebspunkten auszulegen.

Der Abgaskanal kann auch Bestandteil eines Bypasses des Abgasstroms der Brennkraftmaschine des Kraftfahrzeugs sein.

Abgas tritt über einen Abgaseintritt in den Abgaskanal ein und über einen Abgasaustritt aus diesem aus. Vorzugsweise wird der von der Brennkraftmaschine des Kraftfahrzeugs kommende Abgasstrom verteilt über mehrere Abgaskanäle ganz oder teilweise durch den Verdampfer geführt. Hierzu ist dem Verdampfer eine Abgaszuführung auf der Eingangsseite und auf der Ausgangsseite eine Abgasableitung zugeordnet.

In einer Verdampferkassette sind durch die Kapillarstruktur eine Flüssigseite und eine Dampfseite voneinander getrennt. Die Kapillarstruktur ist vorzugsweise durch einen porösen Plattenkörper gebildet. Ein vorteilhafter Aspekt hierbei sieht vor, dass die Kapillarstruktur aus einem gesinterten Material besteht. Insbesondere ist die Kapillarstruktur auf metallischer Basis ausgeführt.

Im Betrieb tritt das Arbeitsmedium von der Flüssigseite durch die Kapillarstruktur hindurch und verdampft hierbei. Die Phasengrenze zwischen Flüssigkeit und Dampf während des Betriebs des Verdampfers verläuft in der Kapillarstruktur, wodurch ein Kapillardruck aufgebaut wird, der den Kreislauf des Arbeitsmediums bedingt bzw. gewährleistet. Auf der Dampfseite tritt das Arbeitsmedium im gas- bzw. dampfförmigen Zustand aus der Kapillarstruktur aus. Von hier aus wird das dampfförmige Arbeitsmedium im Kreislauf ab- bzw. weitergeleitet.

Die Fertigung einer Kapillarstruktur ist besonders vorteilhaft. Die Kapillarstruktur kann separat gefertigt werden. Besonders vorteilhaft ist die Kapillarstruktur aus einer losen metallischen Pulverschüttung gesintert. Dies lässt unterschiedlichste geometrische Gestaltungen der Kapillarstruktur zu. Weiterhin können Dampfkanäle unmittelbar in die Sinterform integriert werden. Vorzugsweise werden die für die Dampfführung notwendigen Dampfkanäle materialeinheitlich einstückig in der Kapillarstruktur ausgebildet.

Grundsätzlich ist es aber auch möglich, die Kapillarstruktur als metallisches Wirrfaservlies auszuführen.

In der Kapillarstruktur sind Dampfkanäle ausgebildet. Besonders vorteilhaft sind die Dampfkanäle auf der Dampfseite in der zum Abgaskanal gerichteten Fläche der Kapillarstruktur vorgesehen.

Auch können auf der Dampfseite Dampfrillen im Kassettengehäuse einer Verdampferkassette ausgebildet sein. Solche Dampfrillen können beispielsweise durch Sicken im Boden der Verdampferkassette ausgeführt sein.

Vorteilhafterweise ist dem Verdampfer bzw. jeder Verdampferkassette eine Dampfsammelkammer zugeordnet, in der der aus dem Verdampfer bzw. der Verdampferkassette strömende Dampf gesammelt und von dort dem Kondensator zugeleitet wird.

Das Kraftfahrzeug-Wärmeübertragersystem sieht vor, dass der Verdampfer mehrere Verdampferkassetten umfasst. Die Verdampferkassetten sind vorzugsweise modulartig so zusammengeschaltet und miteinander gefügt, dass zwischen benachbarten Verdampferkassetten jeweils ein Durchgang für Abgas ausgebildet ist, welches von der Brennkraftmaschine des Kraftfahrzeugs kommt. Dementsprechend ist der Abgaskanal oder sind mehrere Abgaskanäle jeweils zwischen zwei benachbarten miteinander gefügten Verdampferkassetten ausgebildet.

In diesem Zusammenhang ist es weiterhin vorteilhaft, wenn im Abgaskanal bzw. in den Abgaskanälen Wärmeübertragerelemente zur Vergrößerung der Wärmeübergangsfläche vorgesehen sind. Hierdurch kann eine Steigerung der Effizienz des Wärmeübertrags des heißen Abgases auf das Arbeitsmedium erreicht werden. Bevorzugt sind die Wärmeübertragerelemente als Rippen, Stege oder Lamellen ausgebildet. In der Praxis wird eine Edelstahlblechlamelle als besonders gutes Wärmeübertragerelemente zur Vergrößerung der Wärmeübertragungsfläche angesehen. Solche Wärmeübertragerelemente begünstigen den abgasseitigen Wärmeübergang vom Abgasstrom auf das Arbeitsmedium.

Eine Verdampferkassette ist vorzugsweise rechteckig plattenförmig konfiguriert. In einfacher Bauweise weist eine Verdampferkassette zwei miteinander gefügte Schalen körper auf. Die Schalen körper bilden ein Kassettengehäuse. In den Innenraum der Verdampferkassette ist die Kapillarstruktur eingegliedert, welche in auf das Kassettengehäuse angepasster Weise rechteckig plattenförmig konfiguriert ist. Diese Ausgestaltung ist fertigungstechnisch vorteilhaft. Gleiches gilt für den benötigten Bauraum sowie für das Gewicht des Verdampfers.

Die Verdampferkassette bzw. die Schalen körper bestehen bevorzugt aus einem korrosionsbeständigen und/oder gut Wärme leitenden Material, insbesondere einem Metall, vorzugsweise aus Stahl, insbesondere einem Edelstahl.

Ein vorteilhafter Aspekt der Erfindung sieht vor, dass zumindest ein Schalenkörper wenigstens eine Sicke aufweist. Hierbei kann es sich um Ein- bzw. Ausprägungen in der Fläche des Schalen körpers handeln. Solche Sicken können zur Versteifung bzw. Erhöhung der Steifigkeit des Kassettengehäuses vorgesehen sein. Ebenso können solche Sicken als Anschlussflächen oder Strömungskanäle ausgestaltet sein.

Eine vorteilhafte Ausgestaltung sieht vor, dass eine Sicke als Dichtsicke ausgebildet ist. Hierbei handelt es sich um eine umlaufende Sicke in einem Schalenkörper (1. Schalenkörper), welche nach innen in Richtung zur Kapillarstruktur gerichtet ist und die Kapillarstruktur kontaktiert. Die Sicke gelangt auf der Flüssigseite an der Kapillarstruktur zur Anlage gegebenenfalls unter Eingliederung einer temperaturbeständigen Dichtung. Auf diese Weise wird die Flüssigseite der Verdampferkassette durch die Dichtsicke begrenzt. Der Zwischenraum zwischen dem Schalenkörper und der Kapillarstruktur dient als Verteilraum für das zugeführte flüssige Arbeitsmedium.

Bei einer weiterhin vorteilhaften Ausgestaltung ist vorgesehen, dass eine Sicke Bestandteil des Medienzulaufs für das flüssige Arbeitsmedium bildet. Auch kann der Medienzulauf durch jeweils zwei Sicken gebildet sein, die einander so zugeordnet sind, dass zwischen diesen ein Kanal für die Medienzuführung gebildet ist.

Für die Verteilung von flüssigem Arbeitsmedium auf die einzelnen Verdampferkassetten ist dem Verdampfer ein Medienverteiler zugeordnet. Über den Medienverteiler wird das flüssige Arbeitsmedium auf die Medienzuläufe der Verdampferkassetten verteilt.

Weiterhin kann vorgesehen sein, dass auch in dem anderen Schalenkörper (2. Schalenkörper) einer Verdampferkassette Sicken vorgesehen sind. Bei zwei benachbarten Verdampferkassetten liegen die Kassetten entlang der Sicken aneinander an und begrenzen den Abgaskanal. Durch die geometrische Gestaltung, insbesondere die Tiefe bzw. Höhe der Sicken wird der Abstand zwischen den Verdampferkassetten bestimmt und damit die Größe des Abgaskanals definiert.

Die Kapillarstruktur kann unter Eingliederung von Dichtungen in der Verdampferkassette angeordnet sein. Hierbei kommen insbesondere hochtemperaturbeständige Dichtungen, insbesondere Dichtungen auf Graphitbasis, zum Einsatz. Die Dichtung ist für hohe Temperaturen von mehr als 200°C ausgelegt.

Die Kapillarstruktur und die Dichtung bzw. die Dichtungen sind lose in die Verdampferkassette eingelegt und über die Schalenkörper kraftschlüssig gehalten. Die beiden Schalenkörper sind stoffschlüssig miteinander gefügt, ebenso die übrigen Bauteile des Wärmetauschers, wie Anschlussleitungen sowie Gehäusebauteile. Hierdurch wird die Dichtigkeit der Wärmetauscherkassette ebenso wie des Abgaskanals gewährleistet. Zur stoffschlüssigen Verbindung kommt beispielsweise Schweißen, Laserschweißen, Löten, zum Beispiel Ofenlöten, unter Vakuum zur Anwendung. Mittels eines Ofenlötprozesses können eine Vielzahl von Fügestellen gleichzeitig hergestellt werden.

Ein weiterer vorteilhafter Aspekt sieht vor, dass dem Verdampfer ein Ausgleichsbehälter für das Arbeitsmedium vorgeschaltet ist. Insbesondere ist der Ausgleichsbehälter in die Rücklaufleitung integriert.

Eine vorteilhafte Ausgestaltung sieht vor, dass Mittel für einen Druckausgleich im System, insbesondere im Verdampfer, vorgesehen sind. Hierdurch kann die Effizienz des erfindungsgemäßen Kraftfahrzeug-Wärmeübertragersystems weiter gesteigert werden. Zu diesem Zweck sind insbesondere der Verdampfer und der Ausgleichsbehälter über eine Druckausgleichsleitung miteinander verbunden. Auf diese Weise wird ein niedrigeres Druckniveau im Kreislauf sichergestellt. Durch den Druckausgleich zwischen Verdampfer und Ausgleichsbehälter kann die Arbeitsrichtung des Kreislaufs, insbesondere im Startverhalten, beeinflusst werden. Weiterhin ist hierdurch eine Stabilisierung der Temperatur in der Startphase möglich. Auch wird eine systemvorteilhafte hohe Temperaturdifferenz zwischen Dampfleitung und Kondensatorleistung unterstützt.

Der Herstellprozess einer plattenförmigen Kapillarstruktur ist relativ einfach im Vergleich zu einer zylindrischen Struktur. Auch ist die Kapillarstruktur aufgrund ihrer plattenförmigen Gestaltung sehr robust. Besonders vorteilhaft können die Dampfkanäle beim Sinterprozess direkt in die Kapillarstruktur eingebracht werden. Ein weiterer wesentlicher Vorteil ist, dass die Abdichtung zwischen Flüssigseite und Dampfseite des Verdampfers bzw. Verdampferkassette keine aufwändige Passung benötigt. Die Ausgestaltung der erfindungsgemäßen Verdampferkassette und insbesondere der Kapillarstruktur ist damit fehlertolerant bezüglich Form- und Lageabweichungen.

Die Erfindung ist nachfolgend anhand von Zeichnungen näher beschrieben. Es zeigen:
- Figur 1: in perspektivischer Darstellungsweise einen Längsschnitt durch einen Wärmetauscher eines erfindungsgemäßen Kraftfahrzeug-Wärmeübertragersystems und
- Figur 2: einen Querschnitt durch den Wärmetauscher gemäß Figur 1.

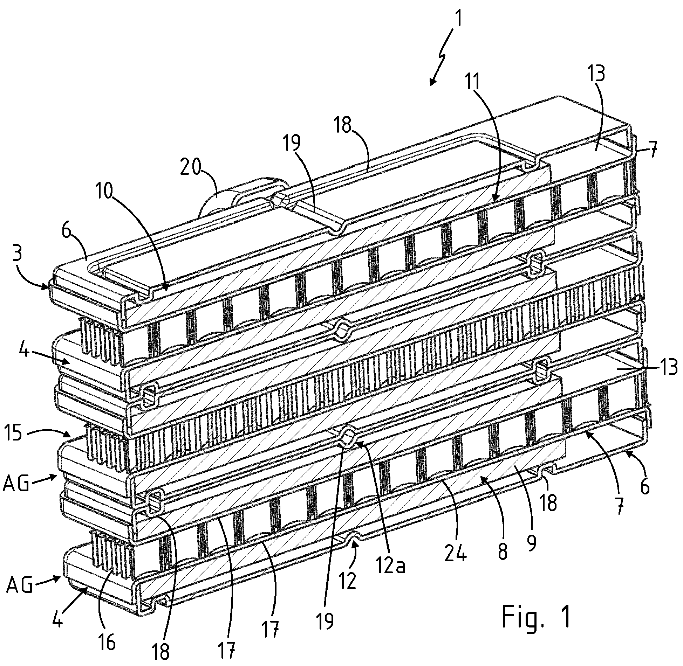

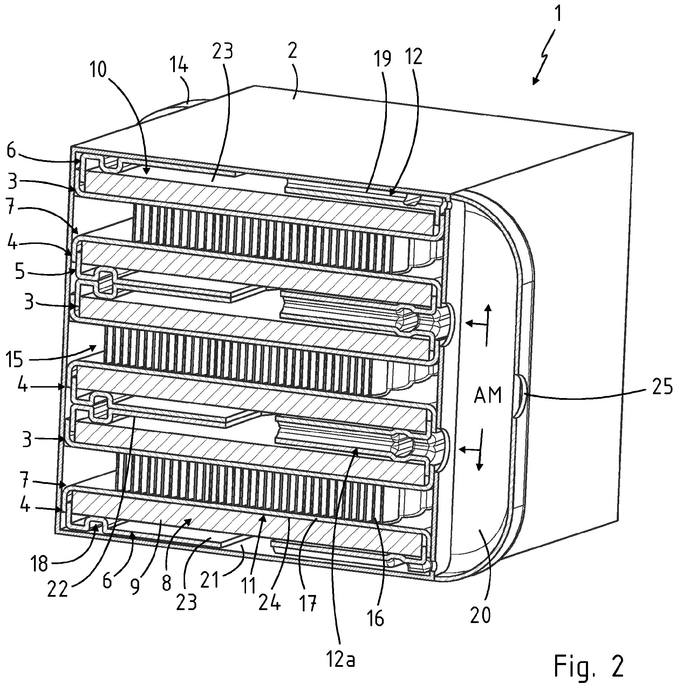

Anhand der Figuren 1 und 2 ist ein Verdampfer 1 eines erfindungsgemäßen Kraftfahrzeug-Wärmeübertragersystems beschrieben.

Ein Kraftfahrzeug-Wärmeübertragersystem weist einen geschlossenen Kreislauf für ein Arbeitsmedium AM auf. Bei dem Arbeitsmedium AM handelt es sich insbesondere um Ethanol. Zu dem Kraftfahrzeug-Wärmeübertragersystem gehören ein nicht dargestellter Kondensator einschließlich der notwendigen Verbindungsleitungen zwischen Verdampfer 1 und Kondensator sowie ein Ausgleichsbehälter für das Arbeitsmedium AM. Der Ausgleichsbehälter ist dem Verdampfer 1 vorgeschaltet.

Der Verdampfer 1 weist mehrere in einem Gehäuse 2 angeordnete Verdampferkassetten 3, 4 auf. Im hier dargestellten Ausführungsbeispiel sind insgesamt sechs Verdampferkassetten 3, 4 vorgesehen. Jede Verdampferkassette 3, 4 weist ein Kassettengehäuse 5 auf, welches zwei miteinander gefügte Schalen körper 6, 7 aus Edelstahl umfasst. Der Schalen körper 6 wird nachfolgend auch als 1. Schalen körper und der Schalenkörper 7 als 2. Schalen körper bezeichnet.

In jeder Verdampferkassette 3, 4 ist eine Kapillarstruktur 8 angeordnet und zwischen den Schalenkörpern 6, 7 aufgenommen. Die in einer Verdampferkassette 3, 4 integrierte Kapillarstruktur 8 ist als poröser Plattenkörper 9 aus einem gesinterten Material, insbesondere einem metallischen Werkstoff, ausgeführt.

In einer Verdampferkassette 3, 4 ist durch die Kapillarstruktur 8 jeweils eine Flüssigseite 10 und eine Dampfseite 11 getrennt. Auf der Flüssigseite 10 ist ein Medienzulauf 12, 12a zur Zuführung von flüssigem Arbeitsmedium AM in die Verdampferkassette 3, 4 vorgesehen. Jede Verdampferkassette 3, 4 weist ferner einen Dampfsammler 13 auf. In den Dampfsammlern 13 wird das in den Verdampferkassetten 3, 4 verdampfte Arbeitsmedium AM gesammelt und über eine in der Figur 2 andeutungsweise zu erkennenden Dampfleitung 14 im Kreislauf des Kraftfahrzeug-Wärmeübertragersystems zum Kondensator geleitet.

Zwischen zwei Verdampferkassetten 3, 4 ist jeweils ein Abgaskanal 15 ausgebildet. Abgas AG aus der Brennkraftmaschine eines Kraftfahrzeuges kommend wird ganz oder teilweise auf die Abgaskanäle 15 verteilt und durch den Verdampfer 1 geleitet. Hierbei strömt das Abgas AG in den Abgaskanälen 15 zwischen den Verdampferkassetten 3, 4 hindurch und gelangt mit diesen wärmeübertragend in Kontakt. Eingangsseitig des Verdampfers 1 ist ein hier nicht dargestellter Abgasverteiler vorgesehen, über welchen das Abgas AG auf die Abgaskanäle 15 verteilt wird. Am gegenüberliegenden Ende des Verdampfers 1 strömt das Abgas AG aus und wird aus dem System abgeleitet.

In den Abgaskanälen 15 sind Wärmeübertragerelemente 16 zur Vergrößerung der Wärmeübergangsfläche vorgesehen. Bei den Wärmeübertragerelementen 16 handelt es sich um in Längsrichtung des Verdampfers 1 orientierte Blechlamellen, die sich jeweils zwischen den Flachseiten 17 von zwei 2. Schalenkörpern 7 erstrecken und mit diesen gefügt sind.

Im 1. Schalenkörper 6 ist eine umlaufende, nach innen gerichtete Dichtsicke 18 vorgesehen. Die Dichtsicke 18 bildet eine Druckzone, mit welcher der 1. Schalenkörper 6 gegen die Kapillarstruktur 8 anliegt. Die Dichtsicke 18 ist umlaufend und begrenzt die Flüssigseite 10 in einer Verdampferkassette 3, 4 randseitig.

Weiterhin sind jeweils in den 1. Schalenkörpern 6 Sicken 19 ausgebildet, die Bestandteil des Medienzulaufs 12, 12a für das flüssige Arbeitsmedium AM bilden. Bei den jeweils äußeren in der Bildebene der Figur 2 oberen Verdampferkassetten 3 und der unteren Verdampferkassetten 4 bildet jeweils eine Sicke 19 den Medienzulauf 12. Bei den mittleren Verdampferkassetten 3, 4 ergänzen sich jeweils zwei gegengleich zueinander angeordnete Sicken 19 zu einem kreisrund ausgestalteten Medienzulauf 12a. Die Sicken 19 bzw. die Medienzuläufe 12, 12a korrespondieren mit einem Medienverteiler 20, über welchen flüssiges Arbeitsmedium AM zugeführt und auf die Verdampferkassetten 3, 4 verteilt wird. Das über die Medienzuläufe 12, 12a zugeführte flüssige Arbeitsmedium AM gelangt über Eintrittsöffnungen 21 in den Flachseiten 22 der 1. Schalenkörper 6 jeweils in die Verdampferkassetten 3, 4.

Die Flachseiten 22 der mittleren Verdampferkassetten 3, 4 kontaktieren einander und sind miteinander gefügt.

Das flüssige Arbeitsmedium AM wird den Verdampferkassetten 3, 4 über den Medienverteiler 20 und die Medienzuläufe 12, 12a zugeführt und gelangt jeweils auf die Flüssigseite 10 der Verdampferkassetten 3, 4. Hier ist zwischen dem 1. Schalenkörper 6 und der Kapillarstruktur 8 ein Verteilraum 23 ausgebildet, die randseitig durch die Dichtsicke 18 begrenzt ist. Das flüssige Arbeitsmedium AM verteilt sich in dem Verteilraum 23 auf der Flüssigseite 10 über die Fläche der Kapillarstruktur 8. Durch Wärmeübertragung vom durch einen Abgaskanal 15 strömenden heißen Abgas AG wird das Arbeitsmedium AM in den Verdampferkassetten 3, 4 verdampft. Das Arbeitsmedium AM tritt von der Flüssigseite 10 durch die Kapillarstruktur 8 hindurch und geht vom flüssigen in den dampfförmigen Zustand über. Die Phasengrenze zwischen Flüssigkeit und Dampf während des Betriebs des Verdampfers 1 verläuft in der Kapillarstruktur 8, wodurch ein Kapillardruck aufgebaut wird, der den Kreislauf des Arbeitsmediums AM bedingt bzw. gewährleistet. Auf der Dampfseite 11 strömt das dampfförmige Arbeitsmedium AM durch Dampfkanäle 24 bis es jeweils in einen Dampfsammler 13 gelangt. Jede Verdampferkassette 3, 4 weist einen Dampfsammler 13 auf. Das dampfförmige Arbeitsmedium AM wird aus den Dampfsammlern 13 über einen Dampfaustritt und die Dampfleitung 14 abgeführt und zum Kondensator geleitet.

Die Dampfkanäle 24 sind in den Figuren 1 und 2 nur andeutungsweise dargestellt. Die Dampfkanäle 24 erstrecken sich auf der Dampfseite 11 in Längs- und Querrichtung der Kapillarstruktur 8.

Im Kondensator wird Wärme vom dampfförmigen Arbeitsmedium an einen Verbraucher abgeben. Insbesondere kann der Kondensator Bestandteil einer Erwärmungseinrichtung des Kraftfahrzeugs sein, beispielsweise der Innenraumbeheizung. Auch kann der Kondensator Bestandteil eines Klimamoduls einer Klimaanlage des Kraftfahrzeugs sein. In Folge der Wärmeabgabe wird das dampfförmige Arbeitsmedium AM im Kondensator verflüssigt und strömt vorzugsweise schwerkraftgetrieben über eine Zulaufleitung, die an einem Zulauf 25 des Medienverteilers 20 angeschlossen ist, zurück in den Verdampfer 1 bzw. die Verdampferkassetten 3, 4.

### Bezugszeichen:

- 1 -: Verdampfer
- 2 -: Gehäuse
- 3 -: Verdampferkassette
- 4 -: Verdampferkassette
- 5 -: Kassettengehäuse
- 6 -: Schalenkörper
- 7 -: Schalenkörper
- 8 -: Kapillarstruktur
- 9 -: Plattenkörper
- 10 -: Flüssigseite
- 11 -: Dampfseite
- 12 -: Medienzulauf
- 12a -: Medienzulauf
- 13 -: Dampfsammler
- 14 -: Dampfleitung
- 15 -: Abgaskanal
- 16 -: Wärmeübertragerelemente
- 17 -: Flachseite von 7
- 18 -: Dichtsicke
- 19 -: Sicke
- 20 -: Medienverteiler
- 21 -: Eintrittsöffnung
- 22 -: Flachseite von 6
- 23 -: Verteilraum
- 24 -: Dampfkanal
- 25 -: Zulauf

- AG -: Abgas
- AM -: Arbeitsmedium

## Patentansprüche

1. Kraftfahrzeug-Wärmeübertragersystem mit einem geschlossenen Kreislauf für ein Arbeitsmedium (AM), wobei das Kraftfahrzeug-Wärmeübertragersystem einen Verdampfer (1) zur Verdampfung des Arbeitsmediums (AM) aufweist, **dadurch gekennzeichnet, dass** der Verdampfer (1) zumindest zwei Verdampferkassetten (3, 4) umfasst, wobei zwischen den Verdampferkassetten (3, 4) ein Abgaskanal (15) ausgebildet ist und jede Verdampferkassette (3, 4) eine Kapillarstruktur (8) sowie eine Flüssigseite (10) und eine Dampfseite (11) aufweist, wobei auf der Flüssigseite (10) ein Medienzulauf (12, 12a) für flüssiges Arbeitsmedium (AM) vorgesehen ist und jeder Verdampferkassette (3, 4) ein Dampfsammler (13) zugeordnet ist.

2. Kraftfahrzeug-Wärmeübertragersystem nach Anspruch 1, **dadurch gekennzeichnet, dass** die Kapillarstruktur (8) durch einen porösen Plattenkörper (9) gebildet ist.

3. Kraftfahrzeug-Wärmeübertragersystem nach Anspruch 1 oder 2, **dadurch gekennzeichnet, dass** die Kapillarstruktur (8) aus einem gesinterten Material besteht.

4. Kraftfahrzeug-Wärmeübertragersystem nach einem der Ansprüche 1 bis 3, **dadurch gekennzeichnet, dass** in der Kapillarstruktur (8) Dampfkanäle (24) ausgebildet sind.

5. Kraftfahrzeug-Wärmeübertragersystem nach Anspruch 4, **dadurch gekennzeichnet, dass** die Dampfkanäle (24) auf der Dampfseite (11) der Kapillarstruktur (8) vorgesehen sind.

6. Kraftfahrzeug-Wärmeübertragersystem nach einem der Ansprüche 1 bis 5, **dadurch gekennzeichnet, dass** eine Verdampferkassette (3, 4) auf der Flüssigseite (10) einen Verteilraum (23) für flüssiges Arbeitsmedium (AM) aufweist.

7. Kraftfahrzeug-Wärmeübertragersystem nach einem der Ansprüche 1 bis 6, **dadurch gekennzeichnet, dass** eine Verdampferkassette (3, 4) zwei miteinander gefügte Schalenkörper (6, 7) aufweist.

8. Kraftfahrzeug-Wärmeübertragersystem nach Anspruch 7, **dadurch gekennzeichnet, dass** zumindest in einem Schalenkörper (6, 7) wenigstens eine Sicke (18, 19) vorgesehen ist.

9. Kraftfahrzeug-Wärmeübertragersystem nach Anspruch 8, **dadurch gekennzeichnet, dass** eine Sicke in Form einer umlaufenden Dichtsicke (18) die Flüssigseite (10) einer Verdampferkassette (3, 4) begrenzt.

10. Kraftfahrzeug-Wärmeübertragersystem nach Anspruch 8 oder 9, **dadurch gekennzeichnet, dass** eine Sicke (19) Bestandteil des Medienzulaufs (12, 12a) bildet.

11. Kraftfahrzeug-Wärmeübertragersystem nach einem der Ansprüche 1 bis 10, **dadurch gekennzeichnet, dass** die Verdampferkassetten (3, 4) in ein Gehäuse (2) integriert sind.

12. Kraftfahrzeug-Wärmeübertragersystem nach einem der Ansprüche 1 bis 11, **dadurch gekennzeichnet, dass** dem Verdampfer (1) ein Medienverteiler (20) zugeordnet ist.

13. Kraftfahrzeug-Wärmeübertragersystem nach einem der Ansprüche 1 bis 12, **dadurch gekennzeichnet, dass** im Abgaskanal (15) Wärmeübertragerelemente (16) vorgesehen sind.

14. Kraftfahrzeug-Wärmeübertragersystem nach einem der Ansprüche 1 bis 13, **dadurch gekennzeichnet, dass** Mittel für einen Druckausgleich vorgesehen sind.

15. Kraftfahrzeug-Wärmeübertragersystem nach einem der Ansprüche 1 bis 14, **dadurch gekennzeichnet, dass** dem Verdampfer (1) ein Ausgleichsbehälter für das Arbeitsmedium (AM) vorgeschaltet ist.

16. Kraftfahrzeug-Wärmeübertragersystem nach einem der Ansprüche 1 bis 15, **dadurch gekennzeichnet, dass** auf der Dampfseite Dampfrillen im Kassettengehäuse einer Verdampferkassette ausgebildet sind.
